# EUROPEAN PATENT APPLICATION

(11) **EP 2 191 727 A1**
(43) Date of publication of application: **02.06.2010**
(21) Application number: 08791206.9
(22) Date of filing: 16.07.2008
(51) Int. Cl.: A23B 4/02, A23B 4/06, A23B 4/10, A23B 4/16

(54) **METHOD OF TREATING FISH MEAT**

(30) Priority: 06.08.2007 JP 2007203942
(71) Applicant: Tenpoint Manufacturing Corporation, General Santos City (PH)
(72) Inventor: ADACHI, Tetsuo, General Santos City (PH)
(74) Representative: Macpherson, Craig Stuart
(86) International application number: PCT/JP2008/062811
(87) International publication number: WO 2009/019960

(57) **Abstract**

It is intended to provide a method of treating fish meat whereby the amount of so-called drip flowing out from fish meat, which is obtained by disassembling, cutting and forming landed fish and then freezing, in the course of the treatment and thawing can be largely reduced. This object is achieved by pre-drying molded fish meat, which has been prepared by disassembling landed fish and cutting them into various shapes, with a cold air so as to lightly dehydrate the surface part, dipping the fish meat in an aqueous solution of sodium chloride for a short period of time so that the fish meat surface turns into a gel to form a coating, vacuum-packaging it as such, further blowing a clean gas such as oxygen into the package to give a gas-containing package, then freezing it by the brine freezing method and storing in that state. Due to a series of the treating procedures as described above, the amount of the drip during thawing the fish meat is considerably reduced.

## Description

### Field of the Intention:

The present invention relates to a method of treating fish meat appropriately for preservation after disassembling and forming.

### Background of the Intention:

It has been well known that caught raw fish, especially big fish like tuna, is disassembled after treatments such as removing scales and inner parts, washing inside the abdominal cavity, and sterilizing. Then, the fish meat is treated appropriately for preservation after cut and formed into shapes such as loins, blocks, and bars called "saku".

As treatments for preservation, combinations of drying, freezing and packaging are used, and during such processes it is very important to keep the fish meat as fresh as possible until consumption and also to prevent the flavors and nutrients from flowing out of the fish meat during thawing.

In frozen preservation, the escaping drip phenomenon of fish meat liquid, so-called "drip", frequently occurs during thawing of the fish meat. This escaping drip phenomenon occurs because ice crystals formed outside of the cells during freezing the fish meat liquid destroy cell tissues and the liquid from melted ice is not absorbed again in tissues when thawing. If there is a significant amount of drip, this results in less flavors and nutrients remaining in the fish meat after thawing. A known measure for preservation at a low temperature without much fluctuation after rapid freezing is effective, but only such method is not sufficient for reducing the amount of drip.

In conventional fish meat preservation art, preserving fish meat in a fresh condition is considered to be most important, and for that reason, methods for making fish meat absorb oxygen and other gases are used. The fish meat preservation methods disclosed in Document 2 and 3 are within the scope.

Document 3 (JP Patent Application Laid-Open No. H3-254631) discloses injecting not only oxygen but blend gases of oxygen and carbon dioxide into a synthetic resin bag containing fish meat to be preserved under the same condition at a low temperature in order to prevent growth of bacteria in the fish meat. Document 2 (JP Patent Application Laid-Open No. H7-123912), which is similar to Document 3 in using blend gases of oxygen and carbon dioxide, further discloses repacking the fish meat into another package to be vacuum-packaged before rapid freeze.

However, any of the above conventional arts, in that references are made to fish meat absorbing oxygen and other gases to keep freshness, does not refer to preventing drip from fish meat. Rather, in Document 2, drip is sucked out when repacking the fish meat into another package.

On the contrary, Document 1 (JP Patent No. 3299517) discloses reducing drip at the time of thawing fish meat as one of the objects of this invention, and it additionally discloses not only exposing the fish meat to oxygen, but also pre-drying at a low temperature during initial treatments of the fish meat. However, concrete steps for low-temperature drying and also the relation between pre-drying and drip reduction rate are not clearly described.

### Background Art:

Document 1: JP Patent No. 3299517
Document 2: JP Patent Application Laid-Open No. H7-123912
Document 3: JP Patent Application Laid-Open No. H3-254631

### Disclosure of the Invention

### Problem To Be Solved By the Invention

In view of the state of above referenced conventional arts, it is an object of the present invention to propose a method of treating fish meat in which the amount of drip can be considerably reduced during treating and after thawing the fish meat.

The inventor of the present invention discovered that a great amount of drip can be reduced by applying pre-drying, brine treatment and then gas-containing packaging or further rapid freezing to fish meat after disassembling and forming.

In the present invention, regarding a fish meat after disassembling and forming processes (cutting into fillets, bars called "saku", slices), the first treatment for the fish meat is to pre-dry it in cold air for a short period of time to remove a little water from a surface of the fish meat; the next treatment is to immerse the fish meat into a cold water and salt solution to form a gelled surface; and then holding the condition, further treatment is to put the fish meat into a bag and vacuum the bag for following gas-containing packaging; the last treatment is to rapidly freeze by brine method, and then the fish meat treated as above is to be preserved in frozen condition. In case that said fish meat is tuna, a gas with more than 70% oxygen concentration is used as a clean gas.

### Effects of the Invention

In the present application, the formed fish meat is subjected to brine immersing treatment and gas-containing packaging after being pre-dried, that makes the surface of the fish meat in the state of gel coating and prevents drip. By rapid freezing after these treatments, it is possible to prevent liquid from flowing out of the inside of the fish meat when thawing.
Furthermore, with the clean gas more than 70% oxygen concentration, it is useful for tuna fish meat to maintain fresh condition and fine color for a long time.

### Best mode for embodiments

In the present application, prior to the frozen treatment, the fish meat is pre-dried. More specifically, the cut and formed fish meat is placed on a ventilated tray such as slotted bamboo tray and dried by cold air for an hour with a fan operated in a cold storage between 0 to 5 °C above freezing temperature and less than 60% humidity. By such pre-drying treatment, the fish meat is slightly dehydrated about 1 mm from the surface, thereby enhancing the effects of the following brine immersing method.

The fish meat after pre-drying treatment is then immersed in cold salt solution of a salt concentration between 1 to 8% and at a temperature between 0 to 5 °C for 30 seconds to 10 minutes. By such process, the surface of the fish meat, which is slightly dehydrated, is gelated and by the gel layer, the fish meat gets into a state of coating thereby preventing the liquid inside the fish meat from flowing out by the gel on the surface.

After the brine immersing treatment, salt solution should be removed from the surface of the fish meat by wiping off or washing away. If brine treatment is applied without pre-drying, the salt solution hardly penetrates and efficient gelating hardly takes place. Also, it is preferred to keep the temperature of the fish meat less than 10 °C during brine treatment.

After the above processes are applied, the fish meat is put into a bag to be vacuumed and clean gas, oxygen, or clean gas such as blended gases of oxygen and carbon dioxide are injected between the fish meat and the bag to form a state of gas-containing package. Being vacuumed, inside of the bag gets into a state of negative pressure, if left in such state, the liquid inside the cells of the fish meat is sucked out by the negative pressure and easily flows out as drip. To prevent that, several gases are injected into the bag to keep a state of positive pressure.

When fish meat is preserved and transported as so-called chilled product, the fish meat in the state of gas-containing package is preserved at a low, not freezing temperature (about 0 to 4 °C), and the chilled fish meat product through the above referenced processes has an advantage for long preservation in fine condition and also less drip after opening the package.

In the treating method of the present invention, after gas-containing package treatment, rapid freezing by brine method is applied. Rapid freezing is a freezing method for treatment in which the maximum ice crystal forming zone is passed within 35 minutes. As is well known, there are rapid freezing methods and slow freezing methods for freezing, and rapid freezing is preferred for preventing drip after thawing. Rapid freezing is preferable for reducing damage of fish meat cells by ice crystals, because ice crystals formed by freezing are comparably small. Among air blast method, liquefied gas spraying method and brine freezing method as the detailed methods for rapid freezing, brine freezing method is applied to the present invention.

Brine freezing method is a method for freezing packaged fish meat by immersing in the thick solution of salt and calcium chloride less than -15 °C. However, applying brine freezing method in the state of vacuum package, drip is apt to escape by vacuum negative pressure. The present invention, as above mentioned, injects oxygen into the bag to form a state of gas-containing package before immersing. Also the gas-containing package by injecting oxygen is effective to keep a surface of fish meat fresh by exposing to oxygen, and then injecting carbon dioxide for the replacement of oxygen to prevent oxidization of fatty fish meat.

### Embodiment 1.

### [Experiment 1]

To check the above effects of the combined treatments of pre-drying and brine immersing, Fish Meat (A) after cutting and forming only and Fish Meat (B) after pre-drying and immersing in salt solution of 3% salt concentration in about 10 minutes respectively placed in a cold storage at 5 °C for 20 hours measuring the amount o released liquid dripped from the fish meat at every 1 hour. Results are shown in [Table 1].

**[Table 1]**

| Elapsed time(hr) | Fish Meat ( A ) | | | Fish Meat ( B ) | | |
|---|---|---|---|---|---|---|
| | Fish Meat Weight ( g ) | Drip Amount ( g ) | Drip Rate ( % ) | Fish Meat Weight ( g ) | Drip Amount ( g ) | Drip Rate ( % ) |
| 0 | 244.2 | - | - | 281.2 | - | - |
| 1 | 241.8 | 2.4 | 0.98 | 280.0 | 1.2 | 0.43 |
| 2 | 241.2 | 0.6 | 0.25 | 279.1 | 0.9 | 0.32 |
| 3 | 240.6 | 0.6 | 0.25 | 278.7 | 0.4 | 0.14 |
| 4 | 240.1 | 0.5 | 0.21 | 278.4 | 0.3 | 0.11 |
| 5 | 239.6 | 0.5 | 0.21 | 278.0 | 0.4 | 0.14 |
| 6 | 239.2 | 0.4 | 0.17 | 277.7 | 0.3 | 0.11 |
| 7 | 238.7 | 0.5 | 0.21 | 277.4 | 0.3 | 0.11 |
| 8 | 238.2 | 0.5 | 0.21 | 277.0 | 0.4 | 0.14 |
| 9 | 237.8 | 0.4 | 0.17 | 276.7 | 0.3 | 0.11 |
| 10 | 237.6 | 0.2 | 0.08 | 276.5 | 0.2 | 0.07 |
| 11 | 237.0 | 0.6 | 0.25 | 276.2 | 0.3 | 0.11 |
| 12 | 236.6 | 0.4 | 0.17 | 275.8 | 0.4 | 0.14 |
| 13 | 236.2 | 0.4 | 0.17 | 275.5 | 0.3 | 0.11 |
| 14 | 235.9 | 0.3 | 0.13 | 275.2 | 0.3 | 0.11 |
| 15 | 235.6 | 0.3 | 0.13 | 274.9 | 0.3 | 0.11 |
| 16 | 235.4 | 0.2 | 0.08 | 274.7 | 0.2 | 0.07 |
| 17 | 235.3 | 0.1 | 0.04 | 274.5 | 0.2 | 0.07 |
| 18 | 235.2 | 0.1 | 0.04 | 274.5 | 0 | 0 |
| 19 | 235.2 | 0 | 0 | 274.5 | 0 | 0 |
| 20 | 235.2 | 0 | 0 | 274.5 | 0 | 0 |

| | | | | | | |
|---|---|---|---|---|---|---|
| Note: In [Table 1], "fish meat weight" shows the fish meat weight after the above listed elapsed time, and "drip amount" and "drip rate" show drip amount per 1 hour. | | | | | | |

In experimental results of [Table 1], the accumulated drip amount and the rate of said accumulated drip amount per fish meat weight in Fish Meat (A) without pre-drying or brine immersing treatment and in Fish Meat (B) with brine immersing treatment are shown in the following [Table 2].

**[Table 2]**

| Elapsed Time ( hr ) | Accumulated Drip Amount ( g ) | | Accumulated Drip Rate ( % ) | | b/a ( % ) |
|---|---|---|---|---|---|
| | Fish Meat A | Fish Meat B | a | b | |
| | | | Fish Meat A | Fish Meat B | |
| 1 | 2.4 | 1.2 | 0.98 | 0.43 | 44 |
| 5 | 4.6 | 3.2 | 1.90 | 1.14 | 60 |
| 10 | 6.6 | 4.7 | 2.74 | 1.67 | 61 |
| 15 | 8.6 | 6.3 | 3.60 | 2.25 | 63 |
| 20 | 9.0 | 6.7 | 3.76 | 2.39 | 64 |

As is known from [Table 2], comparing the drip rate (a) of Fish Meat (A) without pre-drying or brine immersing treatment with the drip rate (b) of Fish Meat (B) with both treatments of pre-drying and brine immersing, the latter is less than a half of the former at the beginning of cold storage, and remains around 60 % even after long elapsed time when the drip amount per every time unit decreases.

### Embodiment 2.

### [Experiment 2]

Next, Samples C1∼C3 (fish meats after pre-drying and brine immersing treatments, only vacuum-packaged), and Samples D1∼D3 (vacuumed and further injected oxygen to form a gas-containing package) are respectably preserved at 5 °C for 1 hour measuring each amount of drip. Results are shown in [Table 3].

**[Table 3]**

| | Fish Meat Weight Before Packaged ( g ) | Drip Amount After Preserved for 1 hour ( g ) | Drip Rate ( % ) |
|---|---|---|---|
| Sample C 1 | 242.7 | 2.3 | 0.95 |
| Sample C 2 | 255.4 | 2.4 | 0.94 |
| Sample C 3 | 235.4 | 1.8 | 0.76 |
| Sample D 1 | 263.9 | 1.3 | 0.49 |
| Sample D 2 | 250.3 | 1.2 | 0.48 |
| Sample D 3 | 248.1 | 1.1 | 0.44 |

| | | | |
|---|---|---|---|
| Note: Each sample is a bar-shaped "saku" (16 cm in length, 5 cm in width, 2.5 cm in thickness) measured and cut from proximate parts of a whole fish. | | | |

According to Experiment 2, even though all fish meats are equally treated pre-drying and brine immersing treatments, comparing the drip rates of only vacuum-packaged with those of vacuumed and further gas-containing packaged, the latter turns out to be about a half of the former.

### Embodiment 3.

### [Experiment 3]

Additionally, the fish meat (Sample E), which is treated vacuum-packaging and further rapid freezing by brine method after a series of treatments in the present invention, that is, pre-drying and brine immersing, and the fish meat (Sample F), which is frozen by conventional air blast method after vacuum-packaged without pre-drying or brine immersing treatment, are thawed in each package during 10 minutes in running water, then left for an hour after being removed from each package. Each measured amount of drip is shown in Table 4.

**[Table 4]**

| | Fish Meat Weight ( g ) | | Drip Amount ( g ) | Drip Rate ( % ) |
|---|---|---|---|---|
| | Before packaged | 1 hour After Thawing | | |
| Sample E | 294.5 | 290.1 | 4.4 | 1.49 |
| Sample F | 289.3 | 276.3 | 13.0 | 4.49 |

| | | | | |
|---|---|---|---|---|
| Note: Each sample of E and F is a bar-shaped "saku" (16 cm in length, 7 cm in width, 2.5 cm in thickness) measured and cut from proximate parts of a whole fish (yellow-fin tuna). | | | | |

According to the results of Experiment 3, comparing the drip amount after thawing the frozen fish meat (Sample E), which is treated a series of treatments in the present invention, with the drip amount after thawing the frozen fish meat (Sample F), which is treated conventional treatments, the former turns out to be about a third of the latter.

### Embodiment 4.

### [Experiment 4]

Color changing and quality deterioration of raw tuna due to the differences of the containing gases are tested.

In the experiment, processes at every 24 hours up to 96 hours in 3 types of temperatures of 1, 3, and 5 °C are observed.

Gases used for experiment are air, oxygen, nitrogen and carbon dioxide, and rates in volume are shown.

Fish meats from a whole fish, of which the same parts or proximate parts are used. However, skin parts (near the surface of the body) and parts around the bones or near the blood clots are hard to be compared due to quality differences of fish meat, therefore, both parts are used separately.

Also, coloring and progresses of coloring are different due to freshness, and fish meat that can be usually eaten fresh is used.

The package material for gas-containing package is bilayer laminated package (nylon PE) of ordinary use.

Results are shown in Table 5 to 7.

**[Table 5] Preserved at 1 (0 to 1) °C**

| | | Coloring | | | | |
|---|---|---|---|---|---|---|
| Oxygen | | Ohr | 24hr | 48hr | 72hr | 96hr |
| 100 | 0 | B2 | A2 | A2 | A2 | A2 |
| | | | | | | |
| Oxygen | Air | 0hr | 24hr | 48hr | 72hr | 96hr |
| 90 | 10 | B2 | A2 | A2 | A2 | A2 |
| 80 | 20 | B2 | A2 | A2 | A2 | A2 |
| 70 | 30 | B2 | A2 | A2 | A2 | A2 |
| 60 | 40 | B2 | A2 | A2 | A2 | B2 |
| 50 | 50 | B2 | B2 | B2 | B2 | B2 |
| 40 | 60 | B2 | B2 | B2 | B2 | B2 |
| 30 | 70 | B2 | B2 | B2 | C2 | C2 |
| 20 | 80 | B2 | B2 | C2 | C2 | C2 |
| 10 | 90 | B2 | C2 | C2 | C2 | C2 |
| 0 | 100 | B2 | C2 | C2 | C2 | C2 |
| | | | | | | |
| Oxygen | Nitrogen | 0hr | 24hr | 48hr | 72hr | 96hr |
| 90 | 10 | B2 | A2 | A2 | A2 | A2 |
| 80 | 20 | B2 | A2 | A2 | A2 | B2 |
| 70 | 30 | 82 | B2 | B2 | B2 | B2 |
| 60 | 40 | B2 | B2 | B2 | B2 | B2 |
| 50 | 50 | B2 | B2 | B2 | B2 | B2 |
| 40 | 60 | B2 | B2 | B2 | C1 | C1 |
| 30 | 70 | B2 | C1 | C1 | C1 | C1 |
| 20 | 80 | B2 | C2 | C2 | C2 | C2 |
| 10 | 90 | B2 | C2 | C2 | C2 | C2 |
| 0 | 100 | B2 | C2 | C2 | C2 | C2 |
| | | | | | | |
| Oxygen | Carbon Dioxide | 0hr | 24hr | 48hr | 72hr | 96hr |
| 90 | 10 | B2 | A2 | A2 | A2 | A2 |
| 80 | 20 | B2 | A2 | A2 | A2 | A2 |
| 70 | 30 | B2 | A2 | A2 | A2 | B2 |
| 60 | 40 | B2 | B2 | B2 | B2 | B2 |
| 50 | 50 | B2 | B2 | B2 | B2 | B2 |
| 40 | 60 | B2 | B2 | C1 | C1 | C1 |
| 30 | 70 | B2 | C1 | C1 | C1 | C1 |
| 20 | 80 | B2 | C1 | C2 | C2 | C2 |
| 10 | 90 | B2 | C2 | C2 | C2 | C2 |
| 0 | 100 | B2 | C2 | C2 | C2 | C2 |

**[Table 6] Preserved at 3 (2 to 3) °C**

| | | Coloring | | | | |
|---|---|---|---|---|---|---|
| Oxygen | | 0hr | 24hr | 48hr | 72hr | 96hr |
| 100 | 0 | B2 | A2 | A2 | A2 | A2 |
| | | | | | | |
| Oxygen | Air | 0hr | 24hr | 48hr | 72hr | 96hr |
| 90 | 10 | B2 | A2 | A2 | A2 | A2 |
| 80 | 20 | B2 | A2 | A2 | A2 | A2 |
| 70 | 30 | B2 | A2 | A2 | A2 | B2 |
| 60 | 40 | B2 | A2 | B2 | B2 | B2 |
| 50 | 50 | B2 | B2 | B2 | B2 | B2 |
| 40 | 60 | B2 | B2 | C1 | C1 | C1 |
| 30 | 70 | B2 | B2 | C1 | C1 | C1 |
| 20 | 80 | B2 | C2 | C2 | C2 | C2 |
| 10 | 90 | B2 | C2 | C2 | C2 | C2 |
| 0 | 100 | B2 | C2 | C2 | C2 | C2 |
| | | | | | | |
| Oxygen | Nitrogen | 0hr | 24hr | 48hr | 72hr | 96hr |
| 90 | 10 | B2 | A2 | A2 | A2 | A2 |
| 80 | 20 | B2 | A2 | B2 | B2 | B2 |
| 70 | 30 | B2 | B2 | B2 | C1 | C1 |
| 60 | 40 | B2 | B2 | B2 | C1 | C1 |
| 50 | 50 | B2 | B2 | C1 | C1 | C1 |
| 40 | 60 | B2 | C1 | C1 | C2 | C2 |
| 30 | 70 | B2 | C1 | C1 | C2 | C2 |
| 20 | 80 | B2 | C2 | C2 | C2 | C2 |
| 10 | 90 | B2 | C2 | C2 | C2 | C2 |
| 0 | 100 | B2 | C2 | C2 | C2 | C2 |
| | | | | | | |
| Oxygen | Carbon Dioxide | 0hr | 24hr | 48hr | 72hr | 96hr |
| 90 | 10 | B2 | A2 | A2 | A2 | A2 |
| 80 | 20 | B2 | A2 | A2 | A2 | B2 |
| 70 | 30 | B2 | A2 | A2 | B2 | B2 |
| 60 | 40 | B2 | B2 | B2 | C1 | C1 |
| 50 | 50 | B2 | B2 | C1 | C1 | C1 |
| 40 | 60 | B2 | C1 | C1 | C2 | C2 |
| 30 | 70 | B2 | C1 | C2 | C2 | C2 |
| 20 | 80 | B2 | C1 | C2 | C2 | C2 |
| 10 | 90 | B2 | C2 | C2 | C2 | C2 |
| 0 | 100 | B2 | C2 | C2 | C2 | C2 |

**[Table 7] Preserved at 5 (4 to 5) °C**

| | | Coloring | | | | |
|---|---|---|---|---|---|---|
| Oxygen | | 0hr | 24hr | 48hr | 72hr | 96hr |
| 100 | 0 | B2 | A2 | A2 | A2 | A2 |
| | | | | | | |
| Oxygen | Air | 0hr | 24hr | 48hr | 72hr | 96hr |
| 90 | 10 | 82 | A2 | A2 | A2 | A2 |
| 80 | 20 | B2 | A2 | A2 | B2 | B2 |
| 70 | 30 | B2 | A2 | B2 | B2 | B2 |
| 60 | 40 | B2 | B2 | B2 | C2 | C2 |
| 50 | 50 | B2 | B2 | C1 | C2 | C2 |
| 40 | 60 | B2 | C2 | C2 | C2 | C2 |
| 30 | 70 | B2 | C2 | C2 | C2 | C2 |
| 20 | 80 | B2 | C2 | C2 | C2 | C2 |
| 10 | 90 | B2 | C2 | C2 | C2 | C2 |
| 0 | 100 | B2 | C2 | C2 | C2 | C2 |
| | | | | | | |
| Oxygen | Nitrogen | 0hr | 24hr | 48hr | 72hr | 96hr |
| 90 | 10 | B2 | A2 | A2 | B2 | B2 |
| 80 | 20 | B2 | A2 | B2 | B2 | B2 |
| 70 | 30 | B2 | B2 | B2 | C1 | C1 |
| 60 | 40 | B2 | B2 | B2 | C1 | C1 |
| 50 | 50 | B2 | B2 | C1 | C1 | C1 |
| 40 | 60 | B2 | C1 | C1 | C2 | C2 |
| 30 | 70 | B2 | C1 | C1 | C2 | C2 |
| 20 | 80 | B2 | C2 | C2 | C2 | C2 |
| 10 | 90 | B2 | C2 | C2 | C2 | C2 |
| 0 | 100 | B2 | C2 | C2 | C2 | C2 |
| | | | | | | |
| Oxygen | Carbon Dioxide | 0hr | 24hr | 48hr | 72hr | 96hr |
| 90 | 10 | B2 | A2 | A2 | A2 | A2 |
| 80 | 20 | B2 | A2 | A2 | B2 | B2 |
| 70 | 30 | B2 | A2 | B2 | B2 | B2 |
| 60 | 40 | B2 | B2 | B2 | C1 | C1 |
| 50 | 50 | B2 | B2 | C1 | C1 | C1 |
| 40 | 60 | B2 | C1 | C1 | C2 | C2 |
| 30 | 70 | B2 | C1 | C2 | C2 | C2 |
| 20 | 80 | B2 | C1 | C2 | C2 | C2 |
| 10 | 90 | B2 | C2 | C2 | C2 | C2 |
| 0 | 100 | B2 | C2 | C2 | C2 | C2 |

The judgment standards of freshness and coloring in the above Table 5∼7 are as follows.

**[Table 8] Judgment standards of freshness and coloring**

| | | | |
|---|---|---|---|
| A1 | Pale Red | Pale color in colored status | Oximyoglobin Formation |
| A2 | Red | Colored status | |
| A3 | Deep Red | Deep color in colored status | |
| B1 | Pale Red Brown | Pale color in colored or color degraded status | Reduced Form |
| B2 | Red Brown | Colored or color degraded status | |
| B3 | Deep Red Brown | Deep color in colored or color degraded status | |
| C1 | Pale Brown | Pale color in color degraded status | Metmyoglobin Formation |
| C2 | Brown | Color degraded status | |
| C3 | Deep Brown | Deep color in color degraded status | |

| | | | |
|---|---|---|---|
| Usually, with fresh fish meat of good quality, changing process by time goes B→A → C or A→C. Color changes due to the temperature, too. | | | |

According to the results of Experiment 4, the higher the oxygen concentration is, the better the coloring and color preservation become in raw fresh tuna fish meat of good quality. Also, using nitrogen, the color degradation goes fast. Injecting carbon dioxide, good color preservation is maintained up to 20% of concentration, however beyond that the color degradation goes fast.
Usually, the higher the preservation temperature is, the worse the coloring and color preservation become. However, using high concentration oxygen, the result is better. Also, in color changed or fast color changing fish meat, the amount of drip increases. It is considered that the quality deteriorates along with the color changing. Note that although the higher the oxygen concentration is, the coloring and color preservation in no fresh fish meat of bad quality become even worse.

Tables 9 to 11 show, in 3 types of temperatures of 1, 3, and 5 °C, the initial fish meat weight and the fish meat weight after 96 hours. The decreased amount of the fish meat weight is the drip amount, on which base drip % is obtained. With higher oxygen concentration and lower temperature, the drip % becomes lower. Note that the drip % in no fresh fish meat of bad quality becomes higher when oxygen concentration is higher.

**[Table 9] Preserved at 1 (0 to 1) °C**

| Oxygen | | 0hr | 96hr | Drip % |
|---|---|---|---|---|
| 100 | 0 | 215.0 | 211.2 | 1.77 |
| | | | | |
| Oxygen | Air | 0hr | 96hr | Drip % |
| 90 | 10 | 235.8 | 232.2 | 1.53 |
| 80 | 20 | 275.3 | 271.1 | 1.53 |
| 70 | 30 | 230.3 | 224.8 | 2.39 |
| 60 | 40 | 228.3 | 222.8 | 2.41 |
| 50 | 50 | 225.0 | 218.8 | 2.76 |
| 40 | 60 | 205.5 | 199.8 | 2.77 |
| 30 | 70 | 240.4 | 232.7 | 3.20 |
| 20 | 80 | 229.9 | 224.1 | 2.52 |
| 10 | 90 | 241.7 | 234.9 | 2.81 |
| 0 | 100 | 209.5 | 203.4 | 2.91 |
| | | | | |
| Oxygen | Nirtogen | 0hr | 96hr | Drip % |
| 90 | 10 | 235.6 | 231.8 | 1.61 |
| 80 | 20 | 219.1 | 214.9 | 1.92 |
| 70 | 30 | 219.2 | 213.9 | 2.42 |
| 60 | 40 | 214.2 | 208.3 | 2.75 |
| 50 | 50 | 243.3 | 237.1 | 2.55 |
| 40 | 60 | 255.9 | 248.7 | 2.81 |
| 30 | 70 | 230.2 | 223.3 | 3.00 |
| 20 | 80 | 179.2 | 173.8 | 3.01 |
| 10 | 90 | 220.0 | 211.5 | 3.86 |
| 0 | 100 | 198.6 | 190.2 | 4.23 |
| | | | | |
| Oxygen | Carbon Dioxide | 0hr | 96hr | Drip % |
| 90 | 10 | 195.5 | 192.0 | 1.79 |
| 80 | 20 | 187.5 | 184.1 | 1.81 |
| 70 | 30 | 191.9 | 187.0 | 2.55 |
| 60 | 40 | 198.4 | 193.1 | 2.67 |
| 50 | 50 | 221.1 | 213.7 | 3.35 |
| 40 | 60 | 249.7 | 239.8 | 3.96 |
| 30 | 70 | 200.8 | 193.5 | 3.64 |
| 20 | 80 | 229.1 | 221.4 | 3.36 |
| 10 | 90 | 195.2 | 188.1 | 3.64 |
| 0 | 100 | 210.8 | 203.8 | 3.32 |

**[Table 10] Preserved at 3 (2 to 3) °C**

| Oxygen | | 0hr | 96hr | Drip % |
|---|---|---|---|---|
| 100 | 0 | 234.3 | 229.0 | 2.26 |
| | | | | |
| Oxygen | Air | 0hr | 96hr | Drip % |
| 90 | 10 | 240.5 | 235.6 | 2.04 |
| 80 | 20 | 231.7 | 226.6 | 2.20 |
| 70 | 30 | 221.4 | 215.5 | 2.66 |
| 60 | 40 | 259.5 | 252.0 | 2.89 |
| 50 | 50 | 220.9 | 213.9 | 3.17 |
| 40 | 60 | 214.3 | 208.0 | 2.94 |
| 30 | 70 | 208.0 | 201.5 | 3.13 |
| 20 | 80 | 254.9 | 245.1 | 3.84 |
| 10 | 90 | 210.8 | 201.8 | 4.27 |
| 0 | 100 | 218.8 | 210.0 | 4.02 |
| | | | | |
| Oxygen | Nitrogen | 0hr | 96hr | Drip % |
| 90 | 10 | 230.3 | 225.3 | 2.17 |
| 80 | 20 | 263.8 | 258.0 | 2.20 |
| 70 | 30 | 231.9 | 225.5 | 2.76 |
| 60 | 40 | 245.6 | 238.5 | 2.89 |
| 50 | 50 | 242.2 | 235.1 | 2.93 |
| 40 | 60 | 222.3 | 215.0 | 3.28 |
| 30 | 70 | 209.6 | 202.3 | 3.48 |
| 20 | 80 | 218.1 | 211.2 | 3.16 |
| 10 | 90 | 237.2 | 227.7 | 4.01 |
| 0 | 100 | 229.2 | 220.4 | 3.84 |
| | | | | |
| Oxygen | Carbon Dioxide | 0hr | 96hr | Drip % |
| 90 | 10 | 251.2 | 246.7 | 1.79 |
| 80 | 20 | 266.9 | 262.0 | 1.84 |
| 70 | 30 | 241.1 | 234.6 | 2.70 |
| 60 | 40 | 225.5 | 219.8 | 2.53 |
| 50 | 50 | 228.7 | 220.5 | 3.59 |
| 40 | 60 | 256.5 | 246.5 | 3.90 |
| 30 | 70 | 217.4 | 208.8 | 3.96 |
| 20 | 80 | 250.6 | 244.0 | 2.63 |
| 10 | 90 | 243.0 | 231.9 | 4.57 |
| 0 | 100 | 200.5 | 193.2 | 3.64 |

**[Table 11] Preserved at 5 (4 to 5) °C**

| Oxygen | | 0hr | 96hr | Drip % |
|---|---|---|---|---|
| 100 | 0 | 218.3 | 211.9 | 2.93 |
| | | | | |
| Oxygen | Air | 0hr | 96hr | Drip % |
| 90 | 10 | 200.8 | 194.8 | 2.99 |
| 80 | 20 | 210.8 | 203.2 | 3.61 |
| 70 | 30 | 213.4 | 204.7 | 4.08 |
| 60 | 40 | 219.6 | 210.2 | 4.28 |
| 50 | 50 | 207.7 | 199.8 | 4.29 |
| 40 | 60 | 198.8 | 190.5 | 4.18 |
| 30 | 70 | 207.3 | 198.5 | 4.25 |
| 20 | 80 | 202.3 | 193.2 | 4.50 |
| 10 | 90 | 222.0 | 211.3 | 4.68 |
| 0 | 100 | 209.7 | 199.7 | 4.77 |
| | | | | |
| Oxygen | Nitrogen | 0hr | 96hr | Drip % |
| 90 | 10 | 220.1 | 212.9 | 3.27 |
| 80 | 20 | 228.3 | 220.5 | 3.42 |
| 70 | 30 | 205.9 | 196.5 | 4.57 |
| 60 | 40 | 202.7 | 193.5 | 4.54 |
| 50 | 50 | 230.6 | 219.5 | 4.81 |
| 40 | 60 | 206.6 | 196.9 | 4.70 |
| 30 | 70 | 220.7 | 210.0 | 4.85 |
| 20 | 80 | 200.9 | 191.5 | 4.68 |
| 10 | 90 | 230.3 | 219.8 | 4.56 |
| 0 | 100 | 233.1 | 221.7 | 4.89 |
| | | | | |
| Oxygen | Carbon Dioxide | 0hr | 96hr | Drip % |
| 90 | 10 | 200.7 | 194.7 | 2.99 |
| 80 | 20 | 206.4 | 199.9 | 3.15 |
| 70 | 30 | 193.1 | 186.4 | 3.47 |
| 60 | 40 | 203.6 | 195.1 | 4.17 |
| 50 | 50 | 211.8 | 202.3 | 4.49 |
| 40 | 60 | 216.9 | 207.2 | 4.47 |
| 30 | 70 | 194.4 | 184.9 | 4.89 |
| 20 | 80 | 190.3 | 180.9 | 4.94 |
| 10 | 90 | 205.8 | 194.8 | 5.32 |
| 0 | 100 | 205.5 | 195.6 | 4.82 |

## Claims

1. A method of treating fish meat comprising:
cutting and forming a whole fish into a predetermined shape to obtain a fish meat;
placing the fish meat in a cold storage to dry a surface of the fish meat with a cold air ;
gelating the surface by immersing the fish meat into a salt water for a predetermined time;
removing the fish meat from the salt water into a bag to be vacuumed;
injecting a clean gas into the bag to form a state of gas-contained package; and rapidly freezing the fish meat by brine method.

2. A method of treating fish meat comprising:
cutting and forming a whole fish into a predetermined shape to obtain a fish meat;
placing the fish meat in a cold storage at a temperature of 0 to 5°C and of a humidity less than 60% with a fan operated to dry a surface of the fish meat with a cold air;
gelating the surface by immersing the fish meat into a salt water of a salt concentration of 1 to 8% and at a temperature of 0 to 5°C to immerse the fish meat for 30 seconds to 10 minutes;
removing the fish meat from the salt water into a bag to be vacuumed;
injecting a clean gas into the bag to form a state of gas-contained package; and rapidly freezing the fish meat by brine method.

3. A method according to claim 1 or 2, wherein said fish meat is tuna and said clean gas is high oxygen gas with more than 70% oxygen concentration.
